# EUROPEAN PATENT APPLICATION

(11) **EP 1 657 621 A2**
(43) Date of publication of application: **17.05.2006**
(21) Application number: 05004056.7
(22) Date of filing: 24.02.2005
(51) Int. Cl.: G06F 1/24, G06F 1/32

(54) **Multifunction computer power button**

(30) Priority: 21.10.2004 US 904046
(71) Applicant: ASUSTeK Computer Inc., Peitou, Taipei City (TW)
(72) Inventor: Perng, Chiy-Ferng, Taipei City (TW)
(74) Representative: Weber, Joachim

(57) **Abstract**

A computer (100) includes an input/output chip (109), a power button (110) coupled to the input/output chip (109), and a controller (112) coupled to the power button (110). In a first operational mode, the input/output chip (109) switches power to the computer (100) in response to an actuation of the power button (110). In a second operational mode, the controller (112) forwards a command to an operating system (120) in response to an actuation of the power button (110), and the input/output chip (109) cuts power to the computer (100) in response to a held actuation of the power button (110). The computer (100) has simplified power switching, in which a single power button (110) controls on/off functionality as well as power saving features.

## Description

The present invention relates to a computer according to the pre-characterizing clauses of claims 1, 9, and 16.

Most computer components have undergone substantial improvements since first development. The need for improvement of a given component may arise from shortcomings of that component or from improvements in other components. For years, the preferred computer power switch was a simple manual switch that physically connected a power supply to the motherboard of the computer. However, with the recent development of advanced operating systems that allow for software power-down and power-save states, the old manual switch is no longer adequate nor desirable.

One type of improved power switch is a pushbutton that toggles power to the computer. When the computer is off and such power button is depressed, the computer is turned on. When the computer is on and the power button is depressed and held down for four seconds, the computer is turned off. This type of power switch is independent of the operating system of the computer since it interfaces directly with low-level circuitry.

Another type of improved power switch is one that is controlled and configured by the operating system itself. One of the most common type of these is not a physical switch at all, but simply a software command that triggers the operating system to initiate shutdown of the computer.

Currently, many computers incorporate the functionality of both types of improved power switches by simply providing both switches to the user. This is a short-sighted approach that ignores user inconvenience and confusion as to which switch to use.

This in mind, the present invention aims at providing a computer having a multifunction power button and method of controlling power switching that offer simplified power management, in which a single button controls on/off functionality as well as power saving features.

This is achieved by a computer and method according to claims 1, 9, and 16. The dependent claims pertain to corresponding further developments and improvements.

As will be seen more clearly from the detailed description following below, the claimed computer and method control power switching by, during a first operational mode, switching power to the computer in response to an actuation of a power button, and by, during a second operational mode, forwarding a command to an operating system in response to an actuation of the power button, and cutting power to the computer in response to a held actuation of the power button.

In the following, the invention is further illustrated by way of example, taking reference to the accompanying drawings. Thereof
Fig.1 is a functional block diagram of a computer according to the invention,
Fig.2 is a state diagram of the computer of Fig. 1 relating to power button input,
Fig.3 is a flowchart of a method according to the invention,
Fig.4 is a block diagram of embodiments of the power button and controller of Fig.1, and
Fig.5 is a flowchart of a boot procedure according to the invention.

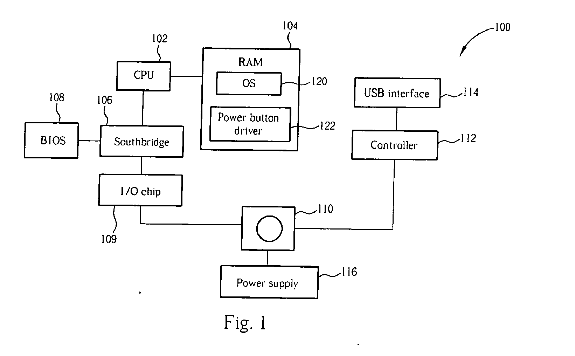

Please refer to Fig. 1, which is a functional block diagram of a computer 100 according to the invention. The computer 100 comprises a central processing unit (CPU) 102, a random-access memory (RAM) 104 such as a dynamic RAM (DRAM), a Southbridge chip 106, a basic input/output system (BIOS) 108, and an input/output (I/O) chip 109 such as the well-known Super I/O chip, all disposed in a conventional configuration. The computer 100 further comprises a power button 110, a power supply 116, a controller 112, and a universal serial bus (USB) interface 114. The power supply 116 is coupled to the other components through the power button 110. The power button 110 is coupled to both the I/O chip 109 and the controller 112, which is coupled to the USB interface 114. The computer 100 further comprises an operating system (OS) 120 and power-button driver 122 stored in the RAM 104 when the computer is powered on.

Fig.1 is schematic and illustrates the components and connections relevant to the invention. Components not relevant to the invention have been omitted, and the components shown may generally be connected in ways other than illustrated.

The power button 110 is a two-position switch such as a pushbutton that may be spring loaded, self resilient (i.e. a membrane button), or have similar mechanical or electrical mechanism so that one state is default and the other state is only entered when the switch is actuated. The power button 110 may also be a computer keyboard key, for example. For clarity of this description, a simple spring loaded pushbutton will be assumed. The power button 110 is said to be depressed or pushed when a person actuates it, and released when the person no longer actuates it. The power button 110 can also be held down in the depressed position. When a different variety of power switch or button is used, it may have a different method of actuation, such as a turn, pull, touch, etc.

Generally, the computer 100 and operating system 120 conform to the advanced configuration and power interface (ACPI) specification that, among other things, suggests various computer power states as shown in Table 1. While the computer 100 is started, the computer 100 transitions from a non-ACPI-capable BIOS boot sequence to the ACPI-capable operating system 120.

**Table 1: ACPI Power States**

| State | Common Name | Description |
|---|---|---|
| S5 | Soft off | Very low power consumption - essentially off Contents of RAM stored onto hard drive, |
| S4 | Hibernate | no power to devices |
| S3 | Suspend Partial | Only RAM and Northbridge have power |
| S2 | Suspend | Power cut from selected devices All power cut to CPU, other devices have |
| S1 | Standby | power |
| S0 | Working State | Power to all devices |

Furthermore, the CPU 102 can typically support various power-save states, which, from full to minimum power, are designated C0-C7. The CPU 102 power-save state C0 is known as the working state, in which all sections and functions of the CPU 102 receive full power. Progressing from state C1 to C6, an increasing quantity of various sections and features of the CPU 102 are denied power until state C7 in which the CPU 102 receives virtually no power and is said to be off. Not all CPUs support power-save states and some support fewer states than mentioned, however, the invention applies to CPUs that support at least one reduced-power state.

In general, the I/O chip 109 supports the power button 110 at all times, while the controller 112 (through the USB interface 114) supports the power button 110 after the driver 122 has been loaded into the RAM 104. However, during the boot of the computer 100, the I/O chip 109 changes functionality so that it will only cut power to the computer 100 when the power button 110 is depressed and held for a specific threshold duration (four seconds is typical, but not limiting). This change in operation of the I/O chip 109 is well known and frequently implemented.

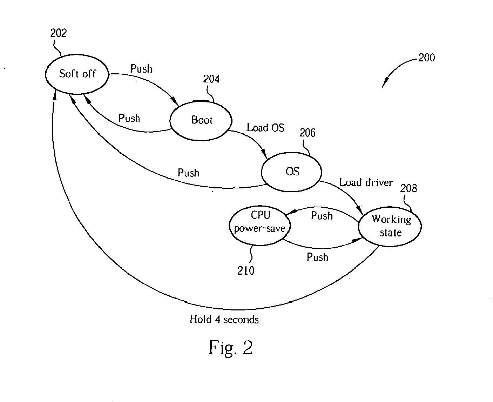

The operation of the invention is described in more detail referring to a state diagram 200 of Fig. 2. First, the computer 100 begins in state 202, the soft off state (i.e. S5). As far as a user is concerned, the computer 100 is off, however, it may still draw a minimal amount of power. When the user depresses and releases the power button 110 (designated by "push" in Fig.2) to turn on the computer 100, the computer 100 begins the boot process 204. During boot, the user may again push the power button 110 to turn off the computer 100 returning it to the soft off state 202. When the boot process 204 is completed, the computer 100 begins to load the operating system 120 in state 206. At this time, the computer 100 can still be powered down by simply pressing the power button 110.

After or during loading of the operating system 120, the driver 122 is loaded for the power button 110, and the computer 100 enters a working state 208. At this time, any depression or push of the power button 110 is detected by the driver 122. Upon detecting a push to the power button 110, the driver 122 instructs the operating system 120 to switch between a predetermined power-save state 210, such as the previously described CPU power-save states (C1-C7), and the working state 208. Since the I/O chip 109 still handles the power button 110 when the power button 110 is held for a specific threshold duration such as four seconds (designated by "hold 4 seconds" in Fig.2), the driver 122 is configured to only trigger switching between states 208 and 210 if the power button 110 is not held for the specific threshold duration, i.e. if there is a simple push and release. Naturally, a push and hold for the specific threshold duration returns the computer 100 to the soft off state 202.

The exact time of transition of power-button functionality provided by the I/O chip 109 is not important. For instance, this transition can occur at any time from early in the BIOS power-on self-test (POST) to the later stages of operating system loading. Also, since the computer 100 spends most of its time in the working or power-save states 208, 210, the exact time that the power-button driver 122 is loaded is also not too critical. What's key is that after the driver 122 is loaded and in response to a push and release of the power button 110 of less than the threshold duration, the controller 112 triggers the USB interface 114 to issue a command through the driver 122 to the operating system 120. This command instructs the operating system 120 to toggle the CPU power-save state between an increased-power state (e.g. C0) and a reduced-power state (e.g. C1-C7). In another embodiment, the command instructs the operating system 120 to toggle the computer power state (i.e. between S0, S1, S2, S3, or S4).

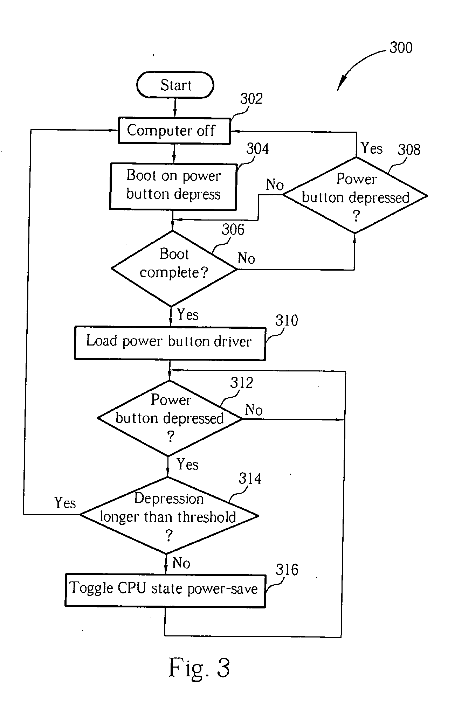

To better explain the state arrangement of Fig.2, Fig.3 shows a flowchart of a method 300 according to the invention. In step 302, the computer 100 is in the soft off state 202 of Fig. 2. When the power button 110 is depressed, the computer 100 boots as shown in step 304. During boot, the power button 110 is handled by the I/O chip 109, which realizes steps 306 and 308 to check if the power button 110 is depressed again. If the power button 110 is depressed during boot, the computer 100 is shut off and return to the soft off state 202 of Fig. 2. If the boot process completes, then next is to load the power-button driver 122 in step 310 (along with the operating system itself). Once loaded, the power-button driver 122 monitors the power button 110 through the controller 112 and USB interface 114, and detects when the power button 110 is depressed, in step 312. If the power button 110 is depressed for at least the threshold duration (i.e. four seconds), then the computer 100 is shut off. If the power button 110 is depressed for shorter than the threshold duration, then the computer 100 is switched between power-save states (e.g. C0-C7, S0-S4 Provided that substantially the same result is achieved, the steps of the method 300 need not be in the exact order shown and need not be contiguous, that is, other steps can be intermediate.

The measurement of a depression duration of the power button 110 can be performed at the hardware level in the controller 112 or at the software level in program code of the driver 122 or operating system 120. This measurement can also be performed by a combination of hardware and software. Moreover, the depression threshold duration need not be four seconds, any other suitable duration will do. The driver 122 can also be coded to provide a default state to the operating system 120. That is, when the driver 122 is first loaded, it can send a command requesting a specific state (e.g. C0-C7, S0-S4) to the operating system 120. Equivalently, the default state can be left for the operating system 120 to determine. In both cases, the driver 122 can simply send a command demanding a specific state or a command to toggle the current state.

It should be noted that if the power-button driver 122 fails to load, the power button 110 still retains all functionality provided by the I/O chip 109. The computer 100 may also have other power-down functionality provided by the operating system 120, such software power control being fully compatible with the invention.

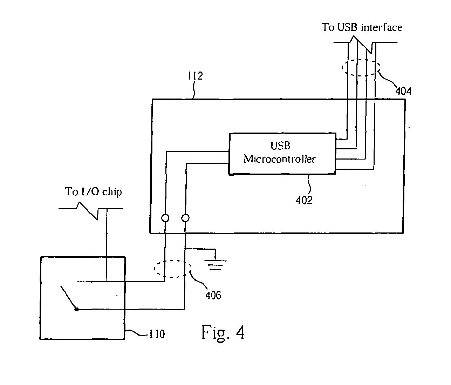

Referring to Fig.4, exemplary embodiments of the power button 110 and controller 112 are shown. The controller 112 comprises a USB microcontroller 402. The power button 110 is a simple switch having one line connected to a ground terminal of the controller 112 and another line connected to a terminal of the controller 112 that is normally pulled to a high level (e.g. 3.3 V). The two lines 406 can be wires or metal traces, for example. The normally high line is also connected to the I/O chip 109, which typically has its own ground. The ground terminal and the normally high terminal are both connected to the USB microcontroller 402. The USB microcontroller 402 is connected to the USB interface 114 by way of up to four USB lines (e.g. V+, D+, D-, G) 404, thus, the computer "sees" the controller 112 and the power-button 110 as a USB device. However, since operation of the power button 110 is relatively simple fewer lines are also acceptable.

When the switch of the power button 110 is closed, the USB microcontroller 402 detects that the normally high line is pulled to ground. Then, the USB microcontroller 402 can pass this information as a command to the USB interface 114.

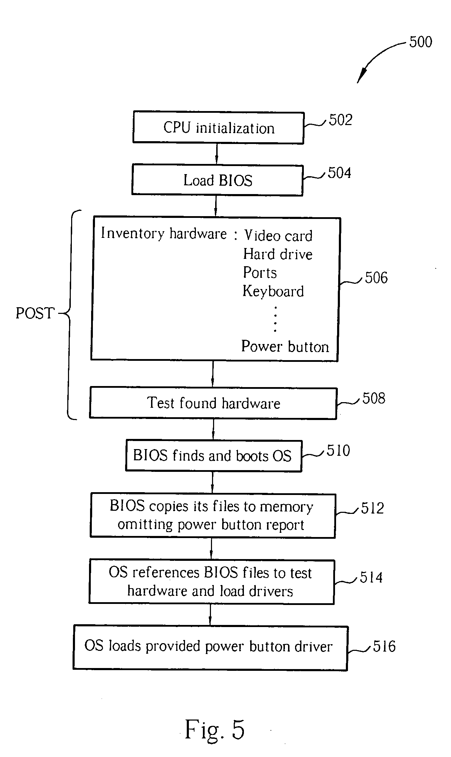

In order to realize the invention in computers that have modern BIOS chips, a modification to the BIOS code is likely to be required. Please refer to Fig. 5 illustrating a flowchart of a boot procedure 500 according to the invention. After initial power up, the CPU 102 is initialized in step 502 and the BIOS is loaded in step 504. Then, the BIOS 108 takes an inventory 506 of hardware making up the computer 100. Among devices such as video cards and ports, the power button 110 is detected. Then in step 508, the BIOS 108 tests the hardware found. Steps 506 and 508 make up part of the BIOS POST operation. After the POST, the BIOS 108 finds and boots the operating system 120 before copying its files to memory (such as the RAM 104), in steps 510 and 512. The files written to memory by the BIOS 108 contain information about the hardware found and tested, for reference by the operating system 120. Thus, according to the invention, the BIOS 108 should not write information related to the power button 110 to memory. This is to prevent the operating system 120 from prematurely loading default power button functionality that may interfere with the power-button driver 122, during the subsequent operating system 120 hardware testing and basic driver loading of step 514. Finally, before the working state is entered, the operating system 120 loads the power-button driver 122 of the invention in step 516.

Provided that substantially the same result is achieved, the steps of the boot process 500 need not be in the exact order shown and need not be contiguous, that is, other steps can be intermediate. Most steps can be changed and adapted to other situations, however, the main concern is that the BIOS 108 does not contain a command that reports the presence of the power button 110 to the operating system 120, or that the BIOS 108 is otherwise prevented from reporting the power button 110 to the operating system 120.

The embodiments discussed can be complemented by additional components, such as a de-bounce processor for smoothing the power button depress signal. The de-bounce processor may form part of the power button 110 or controller 112, for example. In typical implementations, the computer 100 will include other common components such as a hard drive, a compact disc drive, a mouse and keyboard, and a display device.

In contrast to the prior art, the invention provides a simplified power switching scheme in which a single power button controls on/off functionality as well as power saving features.

## Claims

1. A computer (100) comprising:
an input/output chip (109);
a power button (110) coupled to the input/output chip (109) ; and
a controller (112) coupled to the power button (110);
**characterized in that** in a first operational mode, the input/output chip (109) switches power to the computer (100) in response to an actuation of the power button (110); and in a second operational mode, the controller (112) forwards a command to an operating system (120) in response to an actuation of the power button (110), and the input/output chip (109) cuts power to the computer (100) in response to a held actuation of the power button (110).

2. The computer (100) of claim 1, **characterized in that** the first operational mode is before the operating system (120) loads a power-button driver (122), and the second operational mode is after the operating system (120) loads the power-button driver (122).

3. The computer (100) of claim 2, further **characterized by** a central processing unit (102) coupled to the input/output chip (109), wherein in response to the command the operating system (120) switches a power-save state of the central processing unit (102).

4. The computer (100) of claim 3, **characterized in that** when in the power-save state the central processing unit (102) is supplied reduced power, and when not in the power-save state the central processing unit (102) is supplied increased power.

5. The computer (100) of claim 1, **characterized in that** the operating system (120) is an advanced configuration and power interface operating system.

6. The computer (100) of claim 1, **characterized in that** the controller (112) comprises a universal serial bus microcontroller (402).

7. The computer (100) of claim 1, **characterized in that** a first terminal of the power button (110) is wired to a normally pulled high terminal of the controller (112), and a second terminal of the power button (110) is wired to a ground terminal of the controller (112), and the power button (110) comprises a switch that connects the first and second terminals when the power button (110) is depressed so that the normally pulled high terminal of the controller (112) is pulled toward ground.

8. The computer (100) of claim 1, further **characterized by** a basic input/output system (108), wherein the basic input/output system (108) does not contain code for reporting the power button (110) to the operating system (120).

9. A computer (100) comprising:
an input/output chip (109);
a power button (110) coupled to the input/output chip (109);
a central processing unit (102) coupled to the input/output chip (109), wherein in response to a command an operating system (120) switches a power-save state of the central processing unit (102) ;
a memory device (104) coupled to the central processing unit (102) for storing a power-button driver (122);
**characterized by**:
a universal serial bus microcontroller (402) coupled to the power button (110); and in that
before the operating system (120) loads the power-button driver (122), the input/output chip (109) switches power to the computer (100) in response to an actuation of the power button (110); and after the operating system (120) loads the power-button driver (122), the universal serial bus microcontroller (402) forwards the command to the operating system (120) in response to an actuation of the power button (110), and the input/output chip (109) cuts power to the computer (100) in response to a held actuation of the power button (110).

10. The computer (100) of claim 9, **characterized in that** when in the power-save state the central processing unit (102) is supplied reduced power, and when not in the power-save state the central processing unit (102) is supplied increased power.

11. The computer (100) of claim 9, further **characterized by**:
a Southbridge chip (106) coupling the central processing unit (102) to the input/output chip (109);
a power supply (116) coupled to the power button (110); and
a universal serial bus interface (114) coupled to the universal serial bus microcontroller (402).

12. The computer (100) of claim 9, further **characterized by** a basic input/output system (108), wherein the basic input/output system (108) does not contain code for reporting the power button (110) to the operating system (120) .

13. The computer (100) of claim 9, **characterized in that** in response to the command the operating system (120) switches a power-save state of the central processing unit (102).

14. The computer (100) of claim 9, **characterized in that** the operating system (120) is an advanced configuration and power interface operating system.

15. The computer (100) of claim 9, **characterized in that** a first terminal of the power button (110) is wired to a normally pulled high terminal of the universal serial bus microcontroller (402), and a second terminal of the power button (110) is wired to a ground terminal of the universal serial bus microcontroller (402), and the power button (110) comprises a switch that connects the first and second terminals when the power button (110) is depressed so that the normally pulled high terminal of the universal serial bus microcontroller (402) is pulled toward ground.

16. A method of controlling power switching to a computer (100), the method comprising:
starting the computer (100) in a first operational mode;
changing to a second operational mode during a boot of a basic input/output system (108) or a boot of an operating system (120) ;
detecting an actuation of a power button (110);
**characterized by**:
during the first operational mode, switching power to the computer (100) in response to an actuation of the power button (110) ; and
during the second operational mode, forwarding a command to the operating system (120) in response to an actuation of the power button (110), and cutting power to the computer (100) in response to a held actuation of the power button (110).

17. The method of claim 16, further **characterized by**:
loading a power-button driver (122) for forwarding the command to the operating system (120);
wherein the first operational mode is before the power-button driver (122) is loaded, and the second operational mode is after the power-button driver (122) is loaded.

18. The method of claim 16, further **characterized by** preventing the basic input/output system (108) from reporting the power button (110) to the operating system (120).

19. The method of claim 16, further **characterized by**:
in response to the command, switching a power-save state of a central processing unit (102) of the computer (100) .

20. The method of claim 19, **characterized in that** when in the power-save state the central processing unit (102) is supplied reduced power, and when not in the power-save state the central processing unit (102) is supplied increased power.

21. The method of claim 19, further **characterized by** preventing the basic input/output system (108) from reporting the power button (110) to the operating system (120) .
